# EUROPEAN PATENT SPECIFICATION

(11) **EP 0 724 696 B1**
(45) Date of publication and mention of the grant of the patent: **24.03.1999**
(21) Application number: 94928972.2
(22) Date of filing: 12.10.1994
(51) Int. Cl.: F16L 3/20, F16F 1/12, B60G 11/15

(54) **FORCE APPLYING DEVICES**
EINRICHTUNG ZUM AUFBRINGEN EINER KRAFT
DISPOSITIFS D'APPLICATION DE FORCE

(30) Priority: 19.10.1993 GB 9321543
(43) Date of publication of application: 07.08.1996
(73) Proprietor: Popplewell, Peter, Leslie, Hutton, Brentwood, Essex CM13 2JA (GB)
(72) Inventor: Popplewell, Peter, Leslie, Hutton, Brentwood, Essex CM13 2JA (GB)
(74) Representative: Lucking, David John
(86) International application number: GB9402222
(87) International publication number: WO9511398

(56) References cited:
- EP-A- 0 184 404
- DE-A- 3 214 687
- US-A- 3 157 392

## Description

This invention is concerned with improvements relating to force applying devices, and will be described herein as used in a supporting device of the kind used to provide support for an article over a range of movement thereof, and has been devised particularly but not exclusively for use in the provision of a support for pipework.

For example, in many industrial chemical processes, it is necessary to support pipework by the use of a constant force, allowing the pipework to be supported correctly, despite variations in the position of the pipework caused by (for example) thermal expansion.

A convenient method of providing a support for pipework is to utilise a spring, using the reactive force either of a compression spring or of a tension spring. However the reactive force provided by a spring is not constant over its operative range, and varies in direct proportion with the spring rate relative to the axial compression or extension of the spring. Specifically, where a load is being supported by a compression spring, the reactive force increases as the spring is compressed, and decreases as the spring is relaxed in direct proportion to the spring rate. Similarly, where a load is being supported by a tension spring, the reactive force increases as the spring is extended, and decreases as the spring is relaxed. Thus, whilst the variations in the reactive force may be used advantageously in certain circumstances, when attempting to support pipework by constant load, the use of springs causes difficulty.

Many suggestions have been made to provide a supporting device which generates a substantially constant reactive force over its operating range. Generally these devices utilise combinations of bell cranks and levers operating through slide and rotation bearings to change the overall characteristics of the support. However bell crank and lever geometry provides an eccentric shape that has to be bolted to a supporting structure, or alternatively the eccentric geometry will give rise to considerable turning moments. Additionally whilst theoretically it is possible to provide a substantially constant load support, in practice it is difficult and expensive to maintain the device in satisfactory working condition.

In document US-A-3157392 there is disclosed a spring apparatus according to the preamble of claim 1 which, as the spring is deflected, has means to move the spring vertically such that the spring force is not in proportion to the deflection resulting in variation of spring constant.

According to the invention there is provided a force applying device according to claim 1.

Where movement of the compression or tension spring under load would result in a reduction in the spring reaction, the additional force acts axially with the spring thus adding to the spring force to provide a combined axial force as derived according to the particular point of load travel.

Similarly where movement of the spring under load would result in an increase in the spring reactive force such as occurs during compression or tensioning of the spring, the additional force acts axially against the spring thus subtracting from the spring force to provide a combined axial force as desired according to the particular point of load travel.

There will now be given a detailed description, to be read with reference to the accompanying drawings, of a force applying device which is a preferred embodiment of this invention, having been selected for the purposes of illustrating the invention by way of example.

In the accompanying drawings:
Figure 1 shows the variation in reactive force of a conventional spring supporting device during axial movement of a load supported thereby;
Figure 2 is a sectioned front elevation of the pipe support device which is a preferred embodiment of this invention, the device being shown supporting a pipe load at a high position;
Figure 3 is an external side elevation of the device, showing the pipe load at a low position; and
Figure 4 shows the variation in the reactive force in a spring supporting device which may be obtained by the use of this invention.

The supporting device which is the preferred embodiment of this invention comprises a helical compression spring 1 located within a cylindrical housing 3, the device being designed to support a load 8, typically but not exclusively a pipe, from a fixed support structure 7. A rod 5 is secured to an upper spring cap 2 mounted on an upper end portion of the spring 1, the lower end of the spring being secured to a base cap 4. A top plate 15 of the housing is provided with a lug 16 for attachment, through a stirrup hanger 6, to the support structure 7.

The base cap 4 is provided with a pair of diametral trunnions 9 which are located in axially extending slots 12 in the housing 3. The base cap is threaded on to a threaded sleeve adjuster having a double flanged lower end 17 which embraces the base plate 14, enabling the sleeve 13 to be rotated through a central aperture in the base plate 14 whilst locating the sleeve axially, the load rod 5 passing freely through the base cap 4 and base plate 14. In this manner the position of the base cap may be adjusted axially by rotation of the adjuster 13 to vary the reactive force provided by the device, and hence enabling the load bearing capacity of the device to be adjusted.

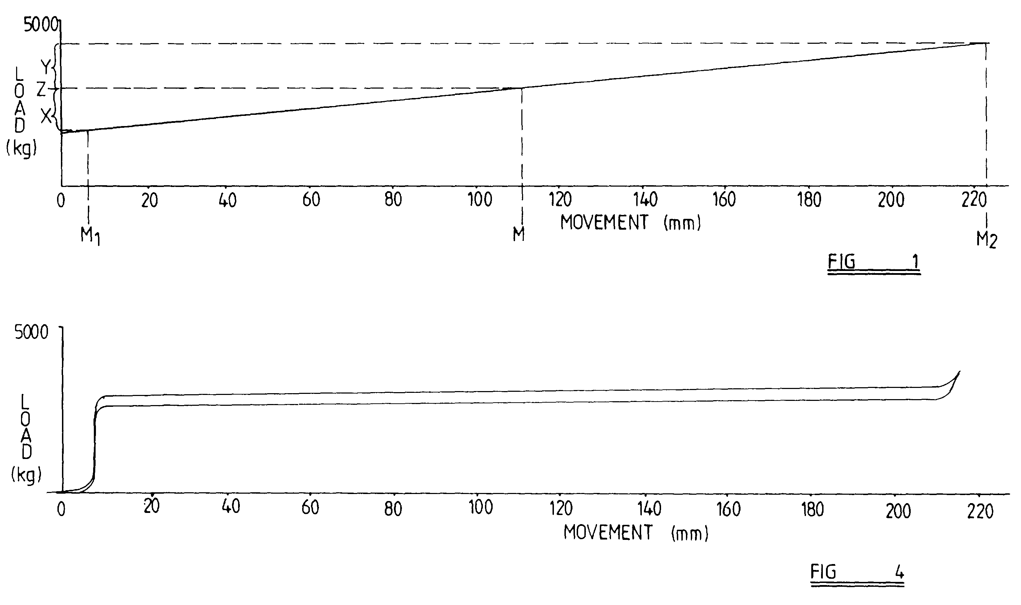

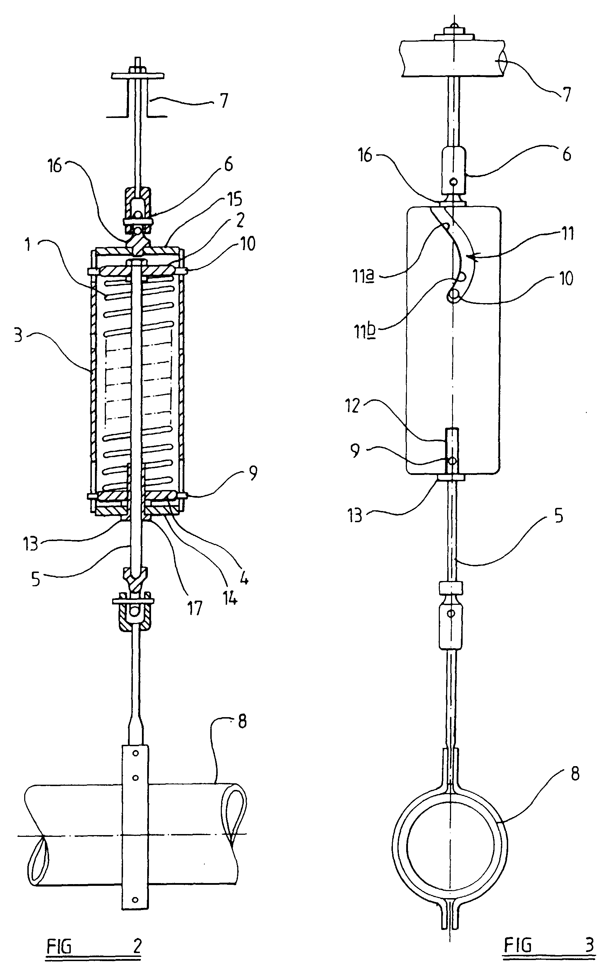

In use, the pipe load 8 will move vertically during plant operation to any position between the high position shown in Figure 2 and the low position shown in Figure 3. The pipe load 8 is hung from the load rod 5 and as the load moves downwardly the load rod pulls the upper cap 2 downwardly, to compress the spring.

The device which is according to this invention comprises means to compensate for variations in the force applied by the spring to the load as the load moves axially, and specifically is operative to negate the variation of the spring reaction of the spring as the spring is compressed and relaxed. In the preferred embodiment the compensation means comprises a pair of trunnions 10 extending diametrally from the cap 2 which coact with cam surfaces formed as a curved cam track 11 in the wall of the cylindrical housing the trunnions sliding or rolling along the cam track.

In the preferred embodiment the helical compression spring 1 is arranged to balance the pipe load 8 at the mid point M of its range of axial movement so that when the pipe load is at the high position as shown in Figure 2, the resilience of the spring in compression would be insufficient to support the pipe load, as is evident from Figure 1.

In particular, the variation in the spring rate of a conventional spring is shown in Figure 1 and it will be seen that, as the spring is compressed, the spring reaction increases. If the spring correctly balances the load at the median point M, at the commencement of downward travel of the load at the position M1, the load is under-supported by X, whilst at the end of its range of travel, at the position M2, the force provided by the spring to counterbalance the load is too great by Y.

In the preferred embodiment the additional support provided on movement of the load from the positions M1 to M as the spring is compressed towards the position M is provided by requiring the load as it moves downwardly to perform additional work caused by the spring being wound up to develop a torsional force to urge the trunnions into engagement with the face 11a of the cam track 11. During such initial movement the trunnions engage with the face 11a of the cam track 11, providing an upward force acting on the trunnions. The rate at which this work is required to be performed is dependent upon the angle of the cam face 11a, and as the spring is compressed towards its median point, the work required to be performed to produce a constant balancing force reduces, and at the median point, the cam face 11a is parallel to the longitudinal axis.

Thus by pre-compressing the spring so that it balances at the median point M (such pre-compressing being obtained by rotation of the adjuster 13), and providing an appropriately shaped cam track 11, the additional force X may be applied in the upward direction to the trunnions by the reactive force acting vertically on the trunnions (the horizontal components cancelling out), the force reducing as the load moves towards its median points.

As the spring is compressed towards its median position, the work required to be performed to produce a constant spring reaction reduces, and at the median point, the cam track is parallel to the longitudinal axis.

As the spring is compressed beyond the median point, some of the work required to be performed during further compression of the spring is counter balanced by a downward force developed by the trunnions by engaging with the lower face 11b of the cam track 11, said downward force increasing from zero at the median point to the maximum Y at the low position M2 of the load.

In this manner, by appropriately shaping of the cam track 11, the counterbalancing force applied to the load by the support device may be adjusted to a constant level Z - that is, the level obtained by the spring at its median point - throughout the range of travel of the load. In practice, as can be seen from Figure 4, a small hysteresis is found to be produced. However it is believed that this hysteresis may be reduced by providing smooth running between the trunnions and the cam track. Nonetheless, a significant improvement in the constancy of the supporting force may be obtained by the use of the invention.

Whilst in the preferred embodiment a cam track is utilised which has a shape which will produce a substantially constant supporting force acting against the load throughout the range of movement of the spring, since the cam surface profile will determine the supporting effort applied to the load rod 5, within limits, any support pattern may be obtained. Thus if desired a bias may be provided to ensure that the load will tend to move to a preferred position. Whilst in the preferred embodiment the spring is a compression spring, if desired the same effect may be achieved when a tension spring is utilised.

Further, whilst the invention has been described in relation to a device for supporting an article, it will readily be understood that the principles of the invention may be utilised to provide a constant force in other circumstances wherein the force would vary according to load movement. Thus the invention may be utilised in any force applying device of this general kind, and is to be deemed to be included within the term "supporting device" as used herein.

## Claims

1. A force applying device comprising, a housing adapted to be secured to a supporting surface or a load (8), a spring (1) supported by the housing (3), and means (5) to enable the load (8) to be secured to the spring (1) or the housing respectively to be supported thereby, compensating means (10, 11) which provides a torsionally developed reaction axial force to be added to the axial reaction force of the spring characterised by the compensating means comprising a trunnion means (10) secured to the spring (1) located within the housing and a curved cam track (11) provided by the wall of the housing, and when the load moves, the trunnion means moving along the cam track (11) so that the magnitude and direction of the additional axial force varies in dependence upon load movement, the shape of the cam track (11) being arranged so that the change in magnitude and direction of the additional reactional force as the load moves, in both directions compensates for variations in the reactive force provided by the spring (1) during movement of the load (8) towards and away a median point (M), where the spring (1) balances.

2. A device according to claim 1 characterised in that the compensating means (10,11) is operative to cause the device to produce a substantially constant reactive force on axial movement of the load (8).

3. A device according to claim 1 or claim 2 characterised in that when the load is applied, the compensating means (10, 11) is operative to increase the magnitude of the additional axial force as the load (8) moves in one direction towards one end of its range of movement, and is operative to decrease the magnitude of the additional axial force as the load moves in an opposite direction towards the other end of its range of movement.

4. A device according to any one of claims 1 to 3 characterised in that the housing (3), is cylindrical and the compensating means comprising a pair of trunnions (10) secured to the spring (1) and projecting oppositely diametrically therefrom, said trunnions (10) engaging with one of a pair of diametrically opposed cam tracks (11) provided by the wall of the cylindrical housing (3), the cam tracks (11) extending around the longitudinal axis such that the trunnions (10) rotate about the longitudinal axis as the load (8) supported by the spring (1) moves longitudinally.

## Patentansprüche

1. Einrichtung zum Aufbringen einer Kraft, mit einem Gehäuse, das an einer Haltefläche oder einer Last (8) sicherbar ist, einer von dem Gehäuse (3) gehaltenen Feder (1), einem Mittel (15) zum Sichern der Last (8) an der Feder (1) oder dem Gehäuse, um jeweils dadurch gehalten zu werden, und einem Kompensationsmittel (10, 11), das eine dreherzeugte axiale Rückstoßkraft liefert, die der axialen Rückstoßkraft der in dem Gehäuse befindlichen Feder hinzuzufügen ist, dadurch gekennzeichnet, daß das Kompensationsmittel ein an der in dem Gehäuse befindlichen Feder (1) gesichertes Zapfmittel (10) und eine von der Wand des Gehäuses bereitgestellte bogenförmige Laufbahn (11) aufweist, und das Zapfenmittel sich bei Bewegung der Last entlang der Laufbahn (11) bewegt, so daß der Betrag und die Richtung der zusätzlichen axialen Kraft in Abhängigkeit von der Lastbewegung variiert, wobei die Gestalt der Laufbahn (11) derart gestaltet ist, daß die Änderung des Betrages und der Richtung der zusätzlichen Rückstoßkraft bei der Bewegung der Last Variationen der von der Feder (1) gelieferten Rückstoßkraft während der Bewegung der Last (8) zu einem mittleren Punkt (M), wo die Feder (1) das Gleichgewicht herstellt, und davon weg, in beiden Richtungen kompensiert.

2. Einrichtung nach Anspruch 1, dadurch gekennzeichnet, daß das Kompensationsmittel (10, 11) die Einrichtung eine im wesentlichen konstante Rückstoßkraft auf eine Axialbewegung der Last (8) erzeugen lassen kann.

3. Einrichtung nach Anspruch 1 oder 2, dadurch gekennzeichnet, daß das Kompensationsmittel (10, 11) bei aufgebrachter Kraft den Betrag der zusätzlichen axialen Kraft bei Bewegung der Last (8) in eine Richtung zu einem Ende ihres Bewegungsbereiches erhöhen kann und bei Bewegung der Last in eine entgegengesetzte Richtung zu dem anderen Ende ihres Bewegungsbereiches den Betrag der zusätzlichen axialen Kraft verringern kann.

4. Einrichtung nach irgendeinem der Ansprüche 1 bis 3, dadurch gekennzeichnet, daß das Gehäuse (3) zylindrisch ist und das Kompensationsmittel ein Paar an der Feder (1) gesicherte und diametral dazu entgegengesetzt vorragende Zapfen (10) umfaßt, wobei die Zapfen (10) ein Paar von der Wand des zylindrischen Gehäuses (3) bereitgestellte diametral gegenüberliegende Laufbahnen (11) eingreifen, wobei die Laufbahnen (11) sich um die Längsachse in der Weise erstrecken, daß die Zapfen (10) sich um die Längsachse drehen, wenn die von der Feder (1) gehaltene Last (8) sich in Längsrichtung bewegt.

## Revendications

1. Dispositif d'application de force comprenant un boîtier apte à être fixé à une surface de support ou une charge (8), un ressort (1) supporté par le boîtier (3), et un moyen (5) pour permettre la fixation de la charge (8) au ressort (1) ou au boîtier afin qu'elle soit supportée respectivement par celui-ci, un moyen de compensation (10, 11) qui crée une force de réaction axiale développée en torsion, destinée à s'ajouter à la force de réaction axiale du ressort, caractérisé en ce que le moyen de compensation comporte un moyen formant pivot (10) fixé au ressort (1) situé à l'intérieur du boîtier et un chemin de guidage courbe (11) formé dans la paroi du boîtier, et en ce que, lorsque la charge se déplace, le moyen formant pivot se déplace sur le chemin de guidage (11) de façon que la valeur et la direction de la force axiale supplémentaire varient en fonction du mouvement de la charge, la forme du chemin de guidage (11) étant conçue pour que le changement de valeur et de direction de la force de réaction supplémentaire lorsque la charge se déplace dans les deux directions compense des variations de la force de réaction exercée par le ressort (1) pendant que la charge (8) s'approche et s'éloigne d'un point médian (M) où le ressort (1) se stabilise.

2. Dispositif selon la revendication 1, caractérisé en ce que le moyen de compensation (10, 11) sert à amener le dispositif à produire une force de réaction sensiblement constante lors du déplacement axial de la charge (8).

3. Dispositif selon la revendication 1 ou la revendication 2, caractérisé en ce que, lorsque la charge est appliquée, le moyen de compensation (10, 11) sert à accroître la valeur de la force axiale supplémentaire à mesure que la charge (8) se déplace dans une première direction vers une première extrémité de sa course, et sert à réduire la valeur de la force axiale supplémentaire à mesure que la charge se déplace dans une direction opposée vers l'autre extrémité de sa course.

4. Dispositif selon l'une quelconque des revendications 1 à 3, caractérisé en ce que le boîtier (3) est cylindrique et le moyen de compensation comporte une paire de pivots (10) fixés au ressort (1) et dépassant de celui-ci dans des directions diamétralement opposées, lesdits pivots (10) s'engageant dans un chemin d'une paire de chemins de guidage diamétralement opposés (11) formés dans la paroi du boîtier cylindrique (3), les chemins de guidage (11) s'étendant autour de l'axe longitudinal de telle façon que les pivots (10) tournent autour de l'axe longitudinal lorsque la charge (8) supportée par le ressort (1) se déplace longitudinalement.
